# FASCICULE DE BREVET EUROPEEN

(11) **EP 2 463 197 B1**
(45) Date de publication et mention de la délivrance du brevet: **19.04.2017**
(21) Numéro de dépôt: 11190800.0
(22) Date de dépôt: 25.11.2011
(51) Int. Cl.: F02C 7/04, F02C 7/045, B64D 33/02

(54) **Entrée d'air pour ensemble propulsif d'aéronef à structure résistante aux surpressions et procédé de réparation d'une entrée d'air d'ensemble propulsif d'aéronef**
Lufteinlass für Antriebseinheit eines Luftfahrzeugs mit einer Struktur, die Überdrücken standhält, und Reparaturverfahren eines Lufteinlasses einer Antriebseinheit eines Luftfahrzeugs
Air intake for propulsion system of an aircraft with a structure withstanding overpressure and method for repairing an air intake of an aircraft propulsion system

(30) Priorité: 09.12.2010 FR 1060285
(43) Date de publication de la demande: 13.06.2012
(73) Titulaire: Airbus Operations (Société par actions simplifiée), 31060 Toulouse (FR)
(72) Inventeur: Boulet, Nicolas, 31300 Toulouse (FR); Affortit, Sébastien, 31490 Brax (FR)
(74) Mandataire: Augarde, Eric

(56) Documents cités:
- EP-A2- 1 621 752
- GB-A- 2 064 412
- GB-A- 2 296 306
- US-A1- 2007 267 246

## Description

### DOMAINE TECHNIQUE

La présente invention se rapporte au domaine des ensembles propulsifs des aéronefs, et concerne plus particulièrement les entrées d'air des nacelles des turboréacteurs d'avion.

### ÉTAT DE LA TECHNIQUE ANTÉRIEURE

Un avion est propulsé par un ou plusieurs ensembles propulsifs qui sont chacun rattachés à l'avion par un mât situé généralement sous une aile ou au niveau du fuselage et qui comprennent chacun un turboréacteur logé dans une nacelle.

Une nacelle prend en général la forme d'une structure comprenant une entrée d'air en amont du turboréacteur, une section médiane destinée à entourer une soufflante du turboréacteur, et une section aval intégrant des moyens d'inversion de poussée et destinée à entourer une chambre de combustion et une ou plusieurs turbines du turboréacteur.

L'entrée d'air comprend, d'une part, une lèvre annulaire formant le bord d'attaque de la nacelle et destinée à capter l'air nécessaire à l'alimentation de la soufflante et d'un ou plusieurs compresseurs internes du turboréacteur, et d'autre part, une structure aval sur laquelle est rapportée la lèvre et qui est destinée à canaliser convenablement l'air vers les aubes de la soufflante.

La structure aval de l'entrée d'air comprend habituellement deux enveloppes annulaires coaxiales raccordées l'une à l'autre en amont par la lèvre de l'entrée d'air. L'enveloppe externe de cette structure aval participe au carénage du turboréacteur tandis que son enveloppe interne délimite extérieurement un conduit d'alimentation en air de ce turboréacteur.

Les entrées d'air des nacelles comportent en général des moyens d'insonorisation destinés à l'atténuation du bruit provoqué par l'écoulement du flux d'air capté par ces entrées d'air et par l'interaction entre les soufflantes des turboréacteurs et ce flux d'air.

Ces moyens d'insonorisation prennent habituellement la forme d'orifices de passage d'air prévus dans l'enveloppe interne des entrées d'air et débouchant dans les alvéoles d'une structure alvéolaire d'insonorisation, de type nid d'abeilles, logée dans un espace situé entre les enveloppes interne et externe des entrées d'air, et configurée pour permettre une dissipation d'énergie acoustique, d'une manière bien connue.

Par ailleurs, l'enveloppe interne d'une entrée d'air comporte habituellement des orifices de drainage, pouvant éventuellement se confondre avec les orifices de passage d'air précités, et destinés au drainage de l'eau susceptible de ruisseler sur l'enveloppe interne. Ces orifices de drainage sont en général localisés autour de la position « six heures » de l'enveloppe interne, c'est-à-dire vers le bas lorsque l'avion équipé de cette entrée d'air est au sol. Ces orifices de drainage communiquent avec des conduits de drainage qui peuvent être formés par des fentes prévues au sein des parois des alvéoles de la structure alvéolaire d'insonorisation précitée lorsque l'entrée d'air est équipée d'une telle structure.

Comme cela est indiqué dans la demande de brevet GB 2 296 306 A, certaines situations de vol, telles que le décollage et l'ascension notamment, peuvent donner lieu à la formation d'une zone de surpression à proximité de la partie basse de l'enveloppe interne équipant l'entrée d'air de la nacelle des ensembles propulsifs.

Or, la perméabilité de l'enveloppe interne étant limitée par nature, cette surpression se traduit en général par une charge appliquée à la zone concernée de l'enveloppe interne pendant une courte période durant laquelle s'établit l'équilibre des pressions de part et d'autre de cette enveloppe interne, notamment lors d'un changement de régime du turboréacteur. Cette charge peut être d'une intensité suffisamment élevée pour endommager la zone concernée de l'enveloppe interne. Il a ainsi été observé des amorces de décollement sur la zone concernée par ce phénomène de surpression.

La demande de brevet précitée propose de réduire la surpression en permettant une circulation d'air entre l'amont et l'aval de l'enveloppe interne au sein de la structure alvéolaire d'insonorisation.

Toutefois, cette solution n'est pas pleinement satisfaisante du fait de la perméabilité limitée de l'enveloppe interne qui reste ainsi sujette à des efforts de nature à endommager cette enveloppe interne.

### EXPOSÉ DE L'INVENTION

L'invention a notamment pour but d'apporter une solution simple, économique et efficace à ce problème, permettant d'éviter les inconvénients précités.

Elle a en particulier pour objet une entrée d'air pour nacelle d'ensemble propulsif d'aéronef, qui présente de bonnes capacités d'insonorisation et/ou de drainage et qui ne soit pas sujette à des risques d'endommagement du fait de phénomènes de surpression du type décrit ci-dessus.

L'invention propose à cet effet une entrée d'air pour nacelle d'ensemble propulsif d'aéronef, comprenant un carénage externe sensiblement annulaire, une enveloppe interne sensiblement annulaire destinée à délimiter un canal d'alimentation en air d'un turboréacteur et comportant une pluralité d'orifices de passage de fluide traversant ladite enveloppe, ainsi qu'une lèvre sensiblement annulaire raccordée à des bords amont respectifs dudit carénage et de ladite enveloppe interne de manière à former un bord d'attaque de ladite entrée d'air.

Selon l'invention, ladite enveloppe interne présente une portion dépourvue d'orifices de passage de fluide s'étendant axialement depuis un bord amont de ladite enveloppe interne sur une distance comprise entre 20% et 90% de l'étendue axiale moyenne de ladite enveloppe interne et présentant une étendue circonférentielle comprise entre 60° et 150° autour d'un axe longitudinal de ladite entrée d'air, lesdits orifices de passage de fluide étant présents et répartis sur le reste de ladite enveloppe interne.

Par étendue axiale moyenne de l'enveloppe interne, il faut comprendre l'étendue axiale de l'enveloppe interne mesurée en moyenne tout autour de l'axe longitudinal de l'entrée d'air.

Bien entendu, la définition de la portion dépourvue d'orifices de passage de fluide implique la présence de tels orifices répartis sur le reste de l'enveloppe interne.

Les orifices de passage de fluide précités peuvent être destinés à l'insonorisation de l'ensemble propulsif équipé de cette entrée d'air auquel cas ces orifices sont configurés pour autoriser au moins une circulation d'air, comme cela apparaîtra plus clairement dans ce qui suit.

Une partie ou la totalité de ces orifices peut être en outre destinée au drainage de l'eau susceptible de ruisseler le long de l'enveloppe interne de l'entrée d'air, auquel cas ces orifices autorisent également une circulation d'eau.

De plus, il est possible sans sortir du cadre de la présente invention que des orifices de passage de fluide de l'enveloppe interne participent au drainage de l'eau mais ne participent pas à l'insonorisation, lorsque cela présente un intérêt.

D'une manière générale, la portion dépourvue d'orifices de passage de fluide de l'enveloppe interne ne permet pas le passage de l'air et n'est donc pas sujette à une charge mécanique, en cas de surpression appliquée à l'enveloppe interne, comme peut l'être l'enveloppe interne des entrées d'air de type connu pour lesquelles une telle surpression induit un déséquilibre de pression de part et d'autre de l'enveloppe interne.

L'invention trouve son principal intérêt lorsque la portion dépourvue d'orifices de passage de fluide de l'enveloppe interne est localisée dans une zone de cette enveloppe qui est exposée aux phénomènes de surpression du type décrit ci-dessus.

A cet effet, la portion dépourvue d'orifices de passage de fluide de l'enveloppe interne est avantageusement localisée dans une région basse de cette enveloppe interne en étant traversée par un plan méridien qui passe par l'axe longitudinal de l'entrée d'air et qui est parallèle à la direction verticale, lorsque l'entrée d'air équipe un ensemble propulsif d'un aéronef se trouvant au sol.

La portion dépourvue d'orifices de passage de fluide de l'enveloppe interne peut ainsi coïncider sensiblement avec la région de l'enveloppe interne qui est la plus exposée aux phénomènes de surpression du type décrit ci-dessus qui se produisent dans certaines phases de vol, dont notamment la phase d'ascension.

La portion dépourvue d'orifices de passage de fluide de l'enveloppe interne est de préférence symétrique par rapport au plan méridien précité.

De plus, l'étendue axiale de la portion dépourvue d'orifices de passage de fluide précitée est de préférence comprise entre 40% et 80% de l'étendue axiale moyenne de l'enveloppe interne.

Préférentiellement, cette portion dépourvue d'orifices de passage de fluide présente une étendue circonférentielle comprise entre 90° et 120° autour de l'axe longitudinal de l'entrée d'air.

L'étendue axiale et l'étendue circonférentielle de la portion dépourvue d'orifices de passage de fluide de l'enveloppe interne sont ainsi choisies pour correspondre au mieux à la région de l'enveloppe interne exposée aux phénomènes de surpression.

La pluralité d'orifices de passage de fluide comprend avantageusement des orifices de passage d'air communiquant avec une structure alvéolaire d'insonorisation logée entre l'enveloppe interne et le carénage externe de l'entrée d'air.

Ces orifices de passage d'air permettent une dissipation d'énergie acoustique au sein des alvéoles de la structure alvéolaire, d'une manière connue en soi.

Les orifices de passage d'air sont de préférence répartis de manière homogène tout autour de l'axe longitudinal de l'entrée d'air.

Dans ce cas, la structure alvéolaire précitée s'étend avantageusement tout autour de cet axe également.

Une partie de la structure alvéolaire d'insonorisation s'étend avantageusement en regard de la portion dépourvue d'orifices de passage de fluide de l'enveloppe interne. Cette partie de la structure alvéolaire est alors recouverte par la portion précitée de l'enveloppe interne.

La structure alvéolaire d'insonorisation peut ainsi présenter une géométrie semblable à celle des structures alvéolaires d'insonorisation du type utilisé dans les entrées d'air de type connu.

L'entrée d'air comprend de préférence des moyens de drainage permettant une circulation d'eau de l'amont vers l'aval au sein d'un espace défini entre le carénage externe et l'enveloppe interne de l'entrée d'air, ces moyens de drainage comprenant des orifices de drainage faisant partie de ladite pluralité d'orifices de passage de fluide.

Comme expliqué ci-dessus, certains ou tous les orifices de drainage précités peuvent également participer à l'insonorisation, le cas échéant en coopération avec la structure alvéolaire précitée.

A cet effet, lesdits moyens de drainage comprennent de préférence la structure alvéolaire d'insonorisation.

Cette structure comprend alors par exemple des fentes formées dans une région radialement interne des parois délimitant entre elles les alvéoles de cette structure pour permettre une circulation vers l'aval de l'eau recueillie dans lesdites alvéoles par l'intermédiaire des orifices de drainage précités.

Dans un premier mode de réalisation de l'invention, la portion dépourvue d'orifices de passage de fluide de l'enveloppe interne prend la forme d'un panneau imperméable, c'est-à-dire dépourvu d'orifices de passage de fluide, qui est réalisé indépendamment de ladite lèvre et qui est encastré dans un évidement d'un bord amont d'au moins un panneau pourvu d'orifices de passage de fluide et faisant partie de l'enveloppe interne.

Dans ce cas, la lèvre de l'entrée d'air peut être d'un type conventionnel.

Le panneau imperméable précité est avantageusement formé d'un drapage de plusieurs plis d'un matériau composite, ce dernier étant par exemple formé de fibres de carbone ou analogues noyées dans une résine durcie.

Dans un deuxième mode de réalisation de l'invention, la portion dépourvue d'orifices de passage de fluide de l'enveloppe interne est formée d'un seul tenant avec la lèvre de l'entrée d'air et s'étend en saillie vers l'aval depuis un bord aval radialement interne de cette lèvre de manière à s'encastrer dans un évidement d'un bord amont d'au moins un panneau pourvu d'orifices de passage de fluide et faisant partie de l'enveloppe interne.

Il est à noter en effet que l'enveloppe interne peut être formée d'un unique panneau ou d'une pluralité de panneaux juxtaposés. Dans ce dernier cas, certains de ces panneaux peuvent éventuellement être dépourvus d'orifices de passage de fluide lorsque cela présente un intérêt.

L'invention concerne également une nacelle pour ensemble propulsif d'aéronef comprenant une entrée d'air du type décrit ci-dessus.

L'invention concerne encore un aéronef comprenant au moins une nacelle du type décrit ci-dessus.

L'invention concerne également un procédé de réparation d'une entrée d'air de nacelle d'ensemble propulsif d'aéronef comprenant un carénage externe sensiblement annulaire, une enveloppe interne sensiblement annulaire destinée à délimiter un canal d'alimentation en air d'un turboréacteur de cet ensemble propulsif et comportant une pluralité d'orifices de passage de fluide traversant ladite enveloppe interne, ainsi qu'une lèvre sensiblement annulaire raccordée aux bords amont respectifs du carénage et de l'enveloppe interne de manière à former un bord d'attaque de l'entrée d'air.

Selon l'invention, le procédé de réparation comprend une étape de découpe d'un évidement dans un bord amont de l'enveloppe interne précitée, ainsi qu'une étape ultérieure d'agencement d'un panneau imperméable dans ledit évidement et de fixation de ce panneau imperméable sur le bord de l'évidement de manière à réaliser une entrée d'air selon le premier mode de réalisation décrit ci-dessus.

Le procédé selon l'invention permet ainsi de réparer l'enveloppe interne d'une entrée d'air lorsque cette enveloppe interne a été endommagée, en particulier du fait de phénomènes de surpression du type décrit ci-dessus, tout en protégeant la partie réparée de l'enveloppe interne des conséquences d'éventuelles futures expositions à ces phénomènes de surpression.

L'étape ultérieure précitée du procédé de réparation comprend de préférence le drapage, dans ledit évidement, de plusieurs plis d'un matériau composite, dont au moins un premier pli est entièrement logé dans l'évidement tandis qu'au moins un deuxième pli, superposé au premier pli, recouvre partiellement le bord amont de l'évidement de manière à assurer la fixation du panneau imperméable au reste de l'enveloppe interne.

Le deuxième pli précité permet en outre d'assurer la continuité de la surface radialement interne de l'enveloppe interne au niveau de la jonction entre le panneau imperméable et le reste de l'enveloppe interne.

En variante, l'ensemble des plis peut également être logé dans l'évidement sans qu'aucun de ces plis ne recouvre le bord amont de l'évidement, lorsque cela présente un intérêt.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique partielle en coupe axiale d'un ensemble propulsif d'avion selon un premier mode de réalisation de l'invention ;
- la figure 2 est une vue schématique partielle en perspective d'une entrée d'air de l'ensemble propulsif de la figure 1 ;
- la figure 3 est une vue schématique partielle en perspective et en coupe axiale de l'entrée d'air de la figure 2 ;
- la figure 4 est une vue schématique partielle en perspective d'une entrée d'air d'un ensemble propulsif d'avion selon un deuxième mode de réalisation de l'invention.

Dans l'ensemble de ces figures, des références identiques peuvent désigner des éléments identiques ou analogues.

### EXPOSÉ DÉTAILLÉ DE MODES DE RÉALISATION PREFERES

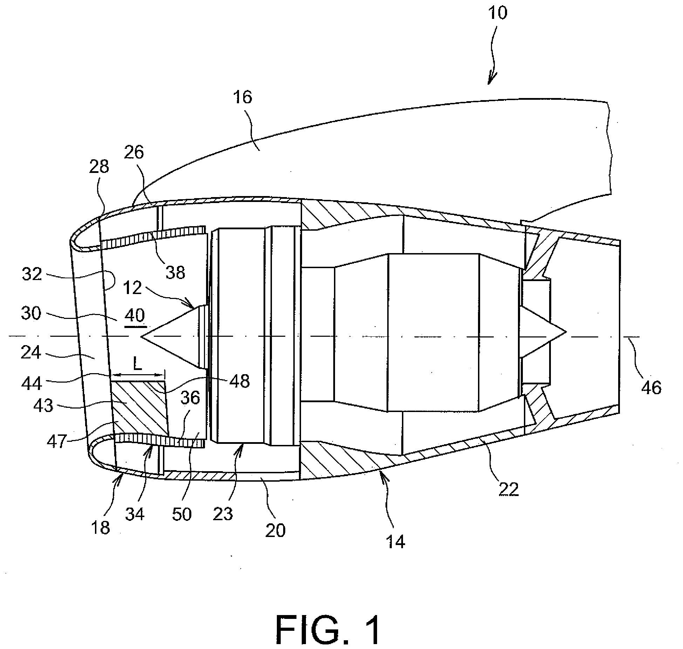

La figure 1 représente un ensemble propulsif 10, comprenant un turboréacteur 12 à double flux logé dans une nacelle 14 et raccordé à un mat 16 destiné à être fixé sous l'aile d'un avion, non visible sur la figure.

La nacelle 14 comprend, de l'amont vers l'aval selon le sens général de l'écoulement des gaz dans le turboréacteur 12, une entrée d'air 18, une section médiane 20 ainsi qu'une section aval 22.

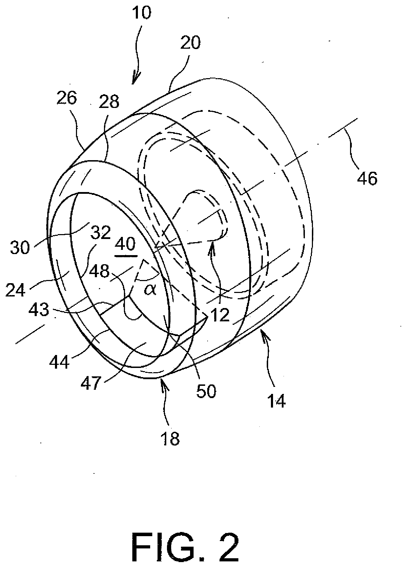

La section médiane 20 de la nacelle 14 est d'un type conventionnel et prend essentiellement la forme d'une enveloppe annulaire disposée autour d'un ensemble de soufflante 23 du turboréacteur 12 illustré très schématiquement sur les figures 1 et 2. Cette section médiane 20 est une pièce indépendante de l'entrée d'air 18 mais elle peut aussi être réalisée d'un seul tenant avec cette entrée d'air 18.

La section aval 22 de la nacelle 14 est également d'un type conventionnel et intègre par exemple des moyens d'inversion de poussée, non visibles sur la figure 1.

L'entrée d'air 18, visible également sur la figure 2, comporte une lèvre 24 sensiblement annulaire formant le bord d'attaque de la nacelle 14, un carénage externe 26 sensiblement annulaire raccordé à un bord aval externe 28 de la lèvre 24, ainsi qu'une enveloppe interne 30 sensiblement annulaire raccordée à un bord aval interne 32 de la lèvre 24 et destinée à canaliser l'air alimentant le turboréacteur 12.

L'entrée d'air 18 comporte en particulier une structure interne 34 sensiblement annulaire comprenant, radialement de l'intérieur vers l'extérieur, l'enveloppe interne 30 précitée, une structure alvéolaire d'insonorisation 36, ainsi qu'une peau interne 38 imperméable.

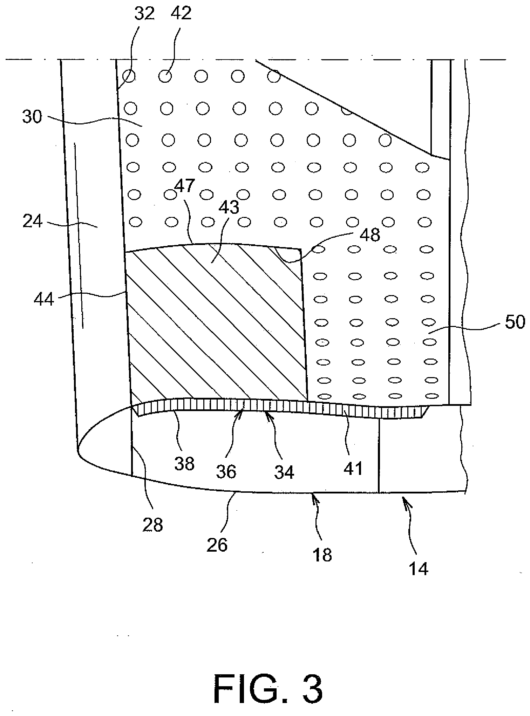

D'une manière connue en soi, la structure interne 34 est configurée pour atténuer le bruit induit par l'écoulement de l'air dans l'entrée d'air 18 et par la rotation de la soufflante du turboréacteur 12. Pour cela, l'enveloppe interne 30 présente une structure perméable permettant une communication fluidique entre le canal 40 alimentant le turboréacteur 12 et les alvéoles 41 (figure 3) de la structure alvéolaire 36.

Plus précisément, l'enveloppe interne 30 est par exemple réalisée en un matériau composite présentant des ajours ou orifices 42 permettant le passage de l'air, comme le montre la figure 3.

D'une manière également connue en soi, la structure interne 34 est formée d'une pluralité de panneaux juxtaposés circonférentiellement, chacun formant une portion de l'enveloppe interne 30, de la structure alvéolaire 36 et de la peau interne 38. En variante, l'enveloppe interne 30, la structure alvéolaire 36, et la peau interne 38 peuvent être chacune formée d'un unique panneau sensiblement annulaire.

Selon l'invention, l'enveloppe interne 30 de l'entrée d'air 18 présente une portion 43 dépourvue d'orifices de passage d'air. On entend par orifice de passage d'air tous types d'orifices ou d'ajours permettant le passage de l'air, de sorte que la portion 43 est sensiblement imperméable à l'air.

La portion 43 précitée est localisée dans une partie basse de l'enveloppe interne 30 et s'étend axialement sur une distance L (figure 1), par exemple égale à 60% environ de l'étendue axiale moyenne de l'enveloppe interne 30, sensiblement depuis un bord amont 44 de l'enveloppe interne 30. Cette portion 43 s'étend circonférentiellement selon un angle α, égal à 90° environ, mesuré autour d'un axe longitudinal 46 du turboréacteur (figure 2), de manière symétrique par rapport à un plan vertical passant par l'axe 46 et correspondant au plan de coupe des figures 1 et 3.

Plus généralement, dans le cadre de la présente invention, l'étendue axiale L de la portion 43 précitée est comprise entre 20% et 90% de l'étendue axiale moyenne de l'enveloppe interne 30, et est de manière préférentielle comprise entre 40% et 80% de cette étendue axiale moyenne. De plus, l'étendue circonférentielle α de la portion 43 précitée est comprise entre 60° et 150°, et est de préférence comprise entre 90° et 120°.

La portion 43 précitée peut avoir une forme sensiblement rectangulaire comme sur les figures 1 à 3 ou toute autre forme appropriée.

D'une manière générale, la portion 43 dépourvue d'orifices de passage de fluide de l'enveloppe interne 30 ne permet pas le passage de l'air et n'est donc pas sujette à une charge mécanique résultant d'une recherche d'équilibre de pression de part et d'autre de cette enveloppe interne 30.

Il est à noter que la portion 43 dépourvue d'orifices de passage de fluide est définie dans une région de l'enveloppe interne 30 qui est habituellement la région la plus exposée aux risques liés aux phénomènes de surpression susceptibles de survenir, notamment en phase d'ascension.

Dans un premier mode de réalisation de l'invention représenté sur les figures 1 à 3, la portion 43 dépourvue d'orifices de passage d'air est formée d'un panneau imperméable 47, par exemple constitué d'un drapage de trois plis de fibres de carbone, ce panneau imperméable 47 étant encastré dans un évidement 48 de forme conjuguée ménagé dans le bord amont d'au moins un panneau ajouré 50 de l'enveloppe interne 30.

Lorsque l'enveloppe interne 30 est formée de plusieurs panneaux incurvés juxtaposés circonférentiellement, l'évidement 48 précité peut être formé dans le bord amont d'un unique panneau ou bien être formé conjointement dans le bord amont de plusieurs de ces panneaux.

Comme cela apparaît sur les figures 1 et 3, il est à noter que la structure alvéolaire 36 se prolonge sous la portion 43 de l'enveloppe interne 30 qui est dépourvue d'orifices de passage d'air. Cela n'est pas indispensable dans le cadre de la présente invention mais peut contribuer à la rigidité de la structure interne 34 de l'entrée d'air 18 et cela peut également faciliter la fabrication de cette entrée d'air 18 en permettant l'utilisation d'une structure d'insonorisation d'un type conventionnel.

En variante, la portion 43 dépourvue d'orifices de passage d'air de l'enveloppe interne 30 peut être réalisée d'un seul tenant avec le reste de cette enveloppe interne 30. Il faut comprendre par là que si l'enveloppe interne 30 est formée d'un unique panneau annulaire, la portion 43 est alors délimitée sur ledit panneau annulaire, tandis que si l'enveloppe interne 30 est formée de plusieurs panneaux incurvés juxtaposés, la portion 43 peut être délimitée conjointement sur un ou plusieurs de ces panneaux.

L'invention selon le premier mode de réalisation décrit ci-dessus présente notamment l'avantage de pouvoir être aisément mise en oeuvre au cours d'opérations d'entretien ou de réparation d'une entrée d'air de type conventionnel, par découpage de l'évidement 48 dans une enveloppe interne 30 de cette entrée d'air puis par insertion d'un panneau imperméable 47 dans ledit évidement 48. Cette dernière opération peut par exemple comprendre le drapage de trois plis de fibres de carbone dans l'évidement 48.

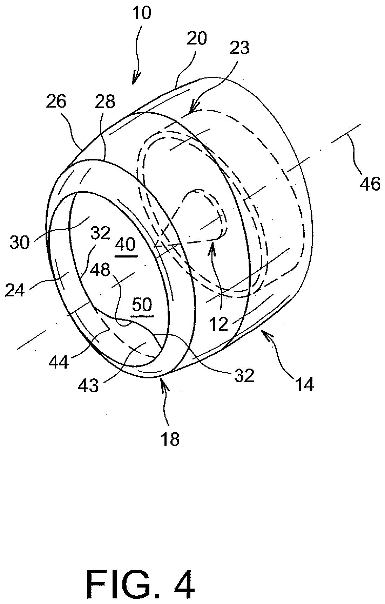

Dans un deuxième mode de réalisation de l'invention illustré sur la figure 4, la portion 43 dépourvue d'orifices de passage d'air de l'enveloppe interne 30 est réalisée d'un seul tenant avec la lèvre 24 de l'entrée d'air 18 et s'étend en saillie vers l'aval depuis le bord aval radialement interne 32 de la lèvre 24 de manière à s'encastrer dans l'évidement 48 décrit ci-dessus.

Dans l'exemple représenté sur la figure 4, la portion 43 précitée présente une forme de cloche dont le sommet 52 est orienté vers l'aval, de sorte que la forme de l'évidement 48 de la figure 4 diffère de celle de l'évidement 48 des figures 1 à 3.

Dans ce deuxième mode de réalisation de l'invention, la continuité entre la lèvre 24 et la portion 43 dépourvue d'orifices de passage d'air peut permettre d'accroitre davantage encore la résistance de l'enveloppe interne 30 aux phénomènes de surpression décrits ci-dessus.

## Revendications

1. Entrée d'air (18) pour nacelle (14) d'ensemble propulsif (10) d'aéronef, comprenant un carénage externe (26) sensiblement annulaire, une enveloppe interne (30) sensiblement annulaire destinée à délimiter un canal (40) d'alimentation en air d'un turboréacteur (12) et comportant une pluralité d'orifices de passage de fluide (42) traversant ladite enveloppe, ainsi qu'une lèvre (24) sensiblement annulaire raccordée à des bords amont respectifs (28, 32) dudit carénage (26) et de ladite enveloppe interne (30) de manière à former un bord d'attaque de ladite entrée d'air (18), ladite entrée d'air (18) étant **caractérisée en ce que** ladite enveloppe interne (30) présente une portion (43) dépourvue d'orifices de passage de fluide s'étendant axialement depuis un bord amont (44) de ladite enveloppe interne (30) sur une distance L comprise entre 20% et 90% de l'étendue axiale moyenne de ladite enveloppe interne (30) et présentant une étendue circonférentielle α comprise entre 60° et 150° autour d'un axe longitudinal (46) de ladite entrée d'air (18), lesdits orifices de passage de fluide (42) étant présents et répartis sur le reste de ladite enveloppe interne (30).

2. Entrée d'air selon la revendication 1, **caractérisée en ce que** ladite portion (43) dépourvue d'orifices de passage de fluide de ladite enveloppe interne (30) est localisée dans une région basse de ladite enveloppe interne (30) de manière à être traversée par un plan qui passe par l'axe longitudinal (46) de ladite entrée d'air (18) et qui est parallèle à la direction verticale, lorsque ladite entrée d'air (18) équipe un ensemble propulsif (10) d'un aéronef se trouvant au sol.

3. Entrée d'air selon la revendication 1 ou 2, **caractérisée en ce que** ladite pluralité d'orifices comprend des orifices de passage d'air (42) communiquant avec une structure alvéolaire d'insonorisation (36) logée entre ladite enveloppe interne (30) et ledit carénage externe (26).

4. Entrée d'air selon la revendication 3, **caractérisée en ce qu'**une partie de ladite structure alvéolaire d'insonorisation (36) s'étend en regard de ladite portion (43) dépourvue d'orifices de passage de fluide de ladite enveloppe interne (30).

5. Entrée d'air selon la revendication 3 ou 4, **caractérisée en ce qu'**elle comprend des moyens de drainage permettant une circulation d'eau de l'amont vers l'aval au sein d'un espace défini entre ledit carénage externe (26) et ladite enveloppe interne (30) de l'entrée d'air (18), lesdits moyens de drainage comprenant des orifices de drainage faisant partie de ladite pluralité d'orifices de passage de fluide (42).

6. Entrée d'air selon la revendication 5, **caractérisée en ce que** lesdits moyens de drainage comprennent ladite structure alvéolaire d'insonorisation (36).

7. Entrée d'air selon l'une quelconque des revendications 1 à 6, **caractérisée en ce que** ladite portion (43) dépourvue d'orifices de passage de fluide de ladite enveloppe interne (30) prend la forme d'un panneau imperméable (47) qui est réalisé indépendamment de ladite lèvre (24) et qui est encastré dans un évidement (48) d'un bord amont d'au moins un panneau (50) pourvu d'orifices de passage de fluide (42) et faisant partie de ladite enveloppe interne (30).

8. Entrée d'air selon la revendication 7, **caractérisée en ce que** ledit panneau imperméable (47) est formé d'un drapage de plusieurs plis d'un matériau composite.

9. Entrée d'air selon l'une quelconque des revendications 1 à 6, **caractérisée en ce que** ladite portion dépourvue d'orifices de passage de fluide (43) de ladite enveloppe interne (30) est formée d'un seul tenant avec ladite lèvre (24) et s'étend en saillie vers l'aval depuis un bord aval (32) radialement interne de ladite lèvre (24) de manière à s'encastrer dans un évidement (48) d'un bord amont d'au moins un panneau (50) pourvu d'orifices de passage de fluide (42) et faisant partie de ladite enveloppe interne (30).

10. Nacelle (14) pour ensemble propulsif (10) d'aéronef, **caractérisée en ce qu'**elle comprend une entrée d'air (18) selon l'une quelconque des revendications précédentes.

11. Aéronef, **caractérisé en ce qu'**il comprend au moins une nacelle (14) selon la revendication 10.

12. Procédé de réparation d'une entrée d'air de nacelle d'ensemble propulsif d'aéronef comprenant un carénage externe sensiblement annulaire, une enveloppe interne sensiblement annulaire destinée à délimiter un canal d'alimentation en air d'un turboréacteur dudit ensemble propulsif et comportant une pluralité d'orifices de passage de fluide traversant ladite enveloppe interne, ainsi qu'une lèvre sensiblement annulaire raccordée aux bords amont respectifs dudit carénage et de ladite enveloppe interne de manière à former un bord d'attaque de ladite entrée d'air, ledit procédé étant **caractérisé en ce qu'**il comprend une étape de découpe d'un évidement (48) dans un bord amont (44) de ladite enveloppe interne, ainsi qu'une étape ultérieure d'agencement d'un panneau imperméable (47) dans ledit évidement (48) et de fixation dudit panneau (47) sur le bord dudit évidement (48), de manière à réaliser une entrée d'air (18) selon la revendication 7 ou 8.

## Patentansprüche

1. Lufteinlass (18) für eine Gondel (14) einer Antriebseinheit (10) eines Luftfahrzeugs, der eine im Wesentlichen ringförmige Außenverkleidung (26), eine im Wesentlichen ringförmige innere Hülle (30), die dazu bestimmt ist, einen Kanal (40) zur Luftversorgung eines Turbostrahltriebwerks (12) zu begrenzen und eine Vielzahl von Fluiddurchlassöffnungen (42) aufweist, die die Hülle durchqueren, sowie eine im Wesentlichen ringförmige Lippe (24) enthält, die mit stromaufwärtigen Rändern (28, 32) der Verkleidung (26) sowie der inneren Hülle (30) verbunden ist, um eine Vorderkante des Lufteinlasses (18) zu bilden, wobei der Lufteinlass (18) **dadurch gekennzeichnet ist, dass** die innere Hülle (30) einen Abschnitt (43) ohne Fluiddurchlassöffnungen hat, der sich axial von einem stromaufwärtigen Rand (44) der inneren Hülle (30) über eine Strecke L zwischen 20% und 90% der mittleren axialen Ausdehnung der inneren Hülle (30) erstreckt und eine Umfangsausdehnung α zwischen 60° und 150° um eine Längsachse (46) des Lufteinlasses (18) hat, wobei die Fluiddurchlassöffnungen (42) über den Rest der inneren Hülle (30) verteilt vorhanden sind.

2. Lufteinlass nach Anspruch 1, **dadurch gekennzeichnet, dass** der Abschnitt (43) ohne Fluiddurchlassöffnungen der inneren Hülle (30) sich in einem unteren Bereich der inneren Hülle (30) befindet, um von einer Ebene durchquert zu werden, die durch die Längsachse (46) des Lufteinlasses (18) geht und parallel zur senkrechten Richtung ist, wenn der Lufteinlass (18) zur Ausstattung einer Antriebseinheit (10) eines Luftfahrzeugs gehört, das sich am Boden befindet.

3. Lufteinlass nach Anspruch 1 oder 2, **dadurch gekennzeichnet, dass** die Vielzahl von Öffnungen Luftdurchlassöffnungen (42) enthält, die mit einer wabenförmigen Schalldämpfungsstruktur (36) in Verbindung stehen, die sich zwischen der inneren Hülle (30) und der Außenverkleidung (26) befindet.

4. Lufteinlass nach Anspruch 3, **dadurch gekennzeichnet, dass** ein Teil der wabenförmigen Schalldämpfungsstruktur (36) sich gegenüber dem Abschnitt (43) ohne Fluiddurchlassöffnungen der inneren Hülle (30) befindet.

5. Lufteinlass nach Anspruch 3 oder 4, **dadurch gekennzeichnet, dass** er Entwässerungseinrichtungen enthält, die einen Wasserdurchfluss von stromaufwärts nach stromabwärts innerhalb eines Raums erlauben, der zwischen der Außenverkleidung (26) und der inneren Hülle (30) des Lufteinlasses (18) definiert ist, wobei die Entwässerungseinrichtungen Entwässerungsöffnungen enthalten, die Teil der Vielzahl von Fluiddurchlassöffnungen (42) sind.

6. Lufteinlass nach Anspruch 5, **dadurch gekennzeichnet, dass** die Entwässerungseinrichtungen die wabenförmige Schalldämpfungsstruktur (36) enthalten.

7. Lufteinlass nach einem der Ansprüche 1 bis 6, **dadurch gekennzeichnet, dass** der Abschnitt (43) ohne Fluiddurchlassöffnungen der inneren Hülle (30) die Form einer undurchlässigen Platte (47) annimmt, die unabhängig von der Lippe (24) hergestellt wird und in eine Aussparung (48) eines stromaufwärtigen Rands mindestens einer Platte (50) eingefügt ist, die mit Fluiddurchlassöffnungen (42) versehen und Teil der inneren Hülle (30) ist.

8. Lufteinlass nach Anspruch 7, **dadurch gekennzeichnet, dass** die undurchlässige Platte (47) von einer Drapierung mehrerer Lagen eines Verbundmaterials gebildet wird.

9. Lufteinlass nach einem der Ansprüche 1 bis 6, **dadurch gekennzeichnet, dass** der Abschnitt ohne Fluiddurchlassöffnungen (43) der inneren Hülle (30) in einem Stück mit der Lippe (24) gebildet wird und sich nach stromabwärts vorstehend von einem stromabwärtigen Rand (32) radial innerhalb der Lippe (24) erstreckt, um sich in eine Aussparung (48) eines stromaufwärtigen Rands mindestens einer Platte (50) einzufügen, die mit Fluiddurchlassöffnungen (42) versehen und Teil der inneren Hülle (30) ist.

10. Gondel (14) für eine Antriebseinheit (10) eines Luftfahrzeugs, **dadurch gekennzeichnet, dass** sie einen Lufteinlass (18) nach einem der vorhergehenden Ansprüche enthält.

11. Luftfahrzeug, **dadurch gekennzeichnet, dass** es mindestens eine Gondel (14) nach Anspruch 10 enthält.

12. Verfahren zur Reparatur eines Lufteinlasses einer Gondel einer Antriebseinheit eines Luftfahrzeugs, der eine im Wesentlichen ringförmige Außenverkleidung, eine im Wesentlichen ringförmige innere Hülle, die dazu bestimmt ist, einen Kanal zur Luftversorgung eines Turbostrahltriebwerks der Antriebseinheit zu begrenzen und eine Vielzahl von Fluiddurchlassöffnungen aufweist, die die innere Hülle durchqueren, sowie eine im Wesentlichen ringförmige Lippe enthält, die mit den stromaufwärtigen Rändern der Verkleidung sowie der inneren Hülle verbunden ist, um eine Vorderkante des Lufteinlasses zu bilden, wobei das Verfahren **dadurch gekennzeichnet ist, dass** es einen Schritt des Schneidens einer Aussparung (48) in einem stromaufwärtigen Rand (44) der inneren Hülle sowie einen späteren Schritt der Anordnung einer undurchlässigen Platte (47) in der Aussparung (48) und der Befestigung der Platte (47) am Rand der Aussparung (48) enthält, um einen Lufteinlass (18) nach Anspruch 7 oder 8 herzustellen.

## Claims

1. An air inlet (18) for the nacelle (14) of an aircraft propulsion unit (10) comprising a substantially annular outer cowling (26), a substantially annular inner envelope (30) intended to delimit a channel (40) feeding air to a turbojet engine (12) and comprising a plurality of fluid passage orifices (42) passing through said envelope, and a substantially annular lip (24) connected to respective upstream edges (28, 32) of said outer cowling (26) and of said inner envelope (30) so as to form a leading edge of said air inlet (18), said air inlet (18) being **characterized in that** sais inner envelope (30) has a portion (43) devoid of fluid passage orifices extending axially from an upstream edge (44) of said inner envelope (30) over a distance L of between 20 % and 90 % of the mean axial span of said inner envelope (30) and having a circumferential span α of between 60° and 150° about a longitudinal axis (46) of said air inlet (18), said fluid passage orifices (42) being present and distributed over the rest of said inner envelope (30).

2. Air inlet according to claim 1, **characterized in that** the portion (43) of said inner envelope (30) that is devoid of fluid passage orifices is located in a lower region of said inner envelope (30) so that it is crossed by a plane which passes through the longitudinal axis (46) of the air inlet (18) and is parallel to the vertical direction when the air inlet (18) equips a propulsion unit (10) of an aircraft that is stationed on the ground.

3. Air inlet according to claim 1, **characterized in that** the plurality of fluid passage orifices comprises air passage orifices (42) communicating with a sound-insulating honeycomb structure (36) housed between said inner envelope (30) and said outer cowling (26).

4. Air inlet according to claim 3, **characterized in that** part of the sound-insulating honeycomb structure (36) extends facing said portion (43) devoid of fluid passage orifices of the inner envelope (30).

5. Air inlet according to claim 3 or 4, **characterized in that** it comprises drainage means allowing circulation of water from upstream to downstream within a space defined between said outer cowling (26) and said inner envelope (30) of the air inlet, the drainage means comprising drainage orifices forming part of the plurality of fluid passage orifices.

6. Air inlet according to claim 5, **characterized in that** the drainage means comprise the sound-insulating honeycomb structure (36).

7. Air inlet according to any one of claims 1 to 6, **characterized in that** said portion (43), of the inner envelope (30), devoid of fluid passage orifices, takes the shape of an impermeable panel (47) which is formed independently of said lip (24) and is set in a recess (48) of an upstream edge of at least one panel (50) provided with fluid passage orifices (42) and forming part of said inner envelope (30).

8. Air inlet according to claim 7, **characterized in that** said impermeable panel (47) is formed of the lay-up of several folds of a composite material.

9. Air inlet according to any one of claims 1 to 6, **characterized in that** said portion (43), of the inner envelope (30), devoid of fluid passage orifices, is formed in a single piece with said lip (24) and extends projecting in the downstream direction from a radially inner downstream edge (32) of the lip (24) so that it fits into a recess (48) of an upstream edge of at least one panel (50) provided with fluid passage orifices (42) and forming part of said inner envelope (30).

10. Nacelle (14) for an aircraft propulsion unit (10), **characterized in that** it comprises an air inlet (18) according to any one of the preceding claims.

11. Aircraft, **characterized in that** it comprises at least one nacelle (14) according to claim 10.

12. Process for repairing a nacelle air inlet of an aircraft propulsion unit comprising a substantially annular outer cowling, a substantially annular inner envelope intended to delimit a duct feeding air to a turbojet engine of the propulsion unit and comprising a plurality of fluid passage orifices passing through said inner envelope, and a substantially annular lip connected to the respective upstream edges of said outer cowling and of said inner envelope so as to form a leading edge of said air inlet, the process being **characterized in that** it comprises a step for cutting out a recess (48) in an upstream edge (44) of said inner envelope, and a subsequent step to arrange an impermeable panel (47) inside said recess (48) and to fix the panel (47) onto the edge of said recess (48), so as to form an air inlet (18) according to claim 7 or 8.
